(19) **Europäisches Patentamt**

**European Patent Office**

**Office européen des brevets**

(11) **EP 0 681 160 B1**

(12) **EUROPÄISCHE PATENTSCHRIFT**

(45) Veröffentlichungstag und Bekanntmachung des Hinweises auf die Patenterteilung:
**05.12.2001   Patentblatt 2001/49**

(51) Int Cl.$^7$: **G01B 7/28**, G01N 35/10

(21) Anmeldenummer: **95105891.6**

(22) Anmeldetag: **20.04.1995**

(54) **Analysegerät mit automatischer Prüfung der Geradlinigkeit der Pipettiernadel**

Analyser with automatic checking of the straightness of a pipetting needle

Analyseur avec vérification automatique de la rectitude d'une aiguille de prélèvement

(84) Benannte Vertragsstaaten:
**AT BE CH DE DK ES FR GB GR IE IT LI LU NL PT**

(30) Priorität: **02.05.1994   CH 138294**

(43) Veröffentlichungstag der Anmeldung:
**08.11.1995   Patentblatt 1995/45**

(73) Patentinhaber: **F. Hoffmann-La Roche AG**
**4002 Basel (CH)**

(72) Erfinder:
• **Bonacina, Guido**
  **CH-6020 Emmenbrücke (CH)**
• **Caratsch, Thomas**
  **CH-8404 Reutlingen (CH)**

• **Moser, Rolf**
  **CH-6354 Vitznau (CH)**

(74) Vertreter:
**AMMANN PATENTANWAELTE AG BERN**
**Schwarztorstrasse 31**
**3001 Bern (CH)**

(56) Entgegenhaltungen:
**EP-A- 0 555 739          WO-A-91/16675**
**FR-A- 1 413 261          US-A- 5 270 210**

• **PATENT ABSTRACTS OF JAPAN vol. 14 no. 498 (P-1124) ,30.Oktober 1990 & JP-A-02 203269 (SHIMADZU) 13.August 1990,**

## Beschreibung

Die Erfindung betrifft ein Analysengerät, das folgende Komponenten enthält:

- eine waagerecht angeordnete Grundplatte auf der Primärgefässe und Sekundärgefässe angeordnet sind,

- eine durch eine Leitung mit einer Dosiervorrichtung verbundenen, aus einem elektrisch leitenden Material bestehenden Pipettiernadel zur Uebertragung von jeweils einem vorbestimmten Flüssigkeitsvolumen von einem Primärgefäss bzw. zu einem Sekundärgefäss,

- eine Transportvorrichtung zum gesteuerten Transport der Pipettiernadel in drei zueinander senkrechten Richtungen (X- ,Y-, Z-Richtung), wobei zwei der Transportrichtungen (X- bzw. Y-Richtung) waagerecht verlaufen und die dritte Transportrichtung (Z-Richtung) vertikal verläuft,

- einen elektrisch leitenden Bezugskörper, der mit der Grundplatte mechanisch und elektrisch verbunden ist und in jeder der waagrechten Transportrichtungen zwei Aussenflächen hat, die senkrecht zur Transportrichtung angeordnet sind.

- eine Steuereinrichtung zur Steuerung der Dosiervorrichtung und der Transportvorrichtung,

- eine elektrische Schaltung zur Erfassung eines elektrischen Kontaktes zwischen der Spitze der Pipettiernadel und dem Bezugskörper, und

- eine mit der elektrischen Schaltung verbundene Anzeige, welche einen mit dieser Schaltung erfassten Kontakt zwischen der Pipettiernadel und dem Bezugskörper anzeigt, wenn die Nadel eine Krümmung aufweist, welche einen solchen Kontakt ermöglicht.

Die Erfindung betrifft insbesondere die Ausgestaltung der Transportvorrichtung der Pipettiernadel der Pipettiervorrichtung eines automatischen Analysengerätes ist, z.B. ein Analysengerät zur Durchführung von Analysen biologischer Proben.

Die Erfindung betrifft ferner ein Verfahren zum automatischen Transport einer Pipettiernadel einer automatischen Pipettiervorrichtung eines Analysengerätes zu einer Anzahl Pipettierpositionen mittels einer Transportvorrichtung, wobei jede Pipettierposition der Position eines bestimmten Gefässes entspricht, wobei die Transportvorrichtung dazu eingerichtet ist, die Pipettiernadel in drei zueinander senkrechten Richtungen (X, Y, Z) zu bewegen, und wobei jede dieser Richtungen parallel zu einer der Koordinatenachsen des Koordinatensystems der Transportvorrichtung ist zwei dieser Richtungen verlaufen waagrecht, die dritte vertikal. Zur Prüfung der Geradlinigkeit der Pipettiernadel wird bei diesem Verfahren die Pipettiernadel relativ zu einem Bezugskörper bewegt und eine Berührung des Bezugskörpers mit der Pipettiernadel wird mittels einer elektrischen Schaltung erfasst, wenn die Pipettiernadel eine Krümmung aufweist, welche eine solche Berührung ermöglicht. Der Bezugskörper ist elektrisch leitend und mit der Grundplatte mechanisch und elektrisch verbunden. Er hat weiterhin in jeder der waagrechten Transportrichtungen zwei Aussenflächen, die senkrecht zur Transportrichtung angeordnet sind.

Ein typischer Pipettiervorgang in einem automatischen Analysengerät ist z.B. die Entnahme eines bestimmten Reagenzvolumens aus einem Primärgefäss, z.B. einem Reagenzbehälter, und dessen Abgabe an einem Sekundärgefäss, z.B. einem Reaktionsgefäss. Dabei führt eine Transportvorrichtung die Pipettiernadel von einer Zielposition zur nächsten. In jeder Zielposition bewirkt die automatisch gesteuerte Dosiervorrichtung die gewünschte Entnahme oder Abgabe eines Flüssigkeitsvolumens.

Im dreidimensionalen, rechtwinkligen Koordinatensystem der Transportvorrichtung sind die Primärbzw. Sekundärgefässe in Gefässbehälter auf Trägerplatten angeordnet, die parallel zur XY- Ebene des Koordinatensystems sind. Wenn die Transportvorrichtung die Pipettiernadel zu einer Zielposition führt, bewegt diese Vorrichtung die Pipettiernadel zunächst in einer zur XY-Ebene parallelen Ebene bis sie oberhalb des Zielgefässes liegt und bewirkt anschliessend eine Abwärtsbewegung der Pipettiernadel bis diese in der richtigen Lage für eine Flüssigkeitsentnahme aus einem Primärgefäss bzw. eine Flüssigkeitsabgabe in ein Sekundärgefäss befindet.

Damit die Transportvorrichtung die Pipettiernadel zu einer genau richtigen Zielposition in der XY-Ebene, d.h. genau oberhalb eines Primär- bzw. Sekundärgefässes, führen kann, müssen folgende Bedingungen erfüllt sein:

- die Steuereinrichtung der Transportvorrichtung muss die X- und Y-Koordinaten der Zielposition als Eingangssignal erhalten, um die Transportvorrichtung entsprechend steuern zu können,

- das Primär- bzw. Sekundärgefäss muss sich an der genau richtigen Stelle befinden,

- die Transportvorrichtung muss in jeder Transportrichtung justiert sein, d.h. in jeder Transportrichtung muss eine Position definiert werden, die als Bezugsposition gilt.

Erfahrungsgemäss treten während des Betriebes einer automatischen Pipettiervorrichtung Deformationen der Pipettiernadel ein, die auf mechanische Belastungen zurückzuführen sind, die z.B. durch die beabsichtigte Verwendung der Pipettiernadel zum Durchstechen von Probengefässdeckel bzw. Reagenzgefässdeckel zur Entnahme von Proben bzw. Reagenzien oder durch eine ungenaue Positionierung der Pipettiernadel entstehen. Eine sehr leichte Krümmung der Pipettiernadel ist in der Regel zulässig, weil für die Positionierung der Pipettiernadel an den verschiedenen Pipettierpositionen eine gewisse Toleranz vorgesehen ist. Ist jedoch die Krümmung der Pipettiernadel grösser als diejenige, die unter der vorgesehenen Toleranz zulässig ist, dann kann dies zu erheblichen Störungen des Betriebes nicht nur der Pipettiervorrichtung, sondern auch des ganzen Analysengerätes führen. Derartige Störungen können Stunden nach der Inbetriebnahme des Analysengerätes auftreten und können derartige Schäden (u. a. Proben- bzw. Reagenzienverluste) bzw. Kosten verursachen, u.a. Kosten des Entpannens durch den Benutzer bzw. durch einen externen Dienst, sowie weitere Kosten die durch den Ausfall des Analysengerätes entstehen.

Bei der Verwendung von automatischen Pipettiervorrichtungen der oben erwähnten Art ist es daher wünschenswert, nach der Justierung der Transportvorrichtung der Pipettiernadel und vor jeder Inbetriebnahme des Analysengerätes die Geradlinigkeit der Pipettiernadel mit einem zuverlässigen Verfahren zu prüfen, um nach Bedarf die Pipettiernadel vor der Inbetriebnahme zu ersetzen.

Es ist aus der EP-A-0555739 eine automatische Pipettiervorrichtung bekannt, welche folgende Komponenten enthält:

- eine waagerecht angeordnete Grundplatte auf der Primärgefässe und Sekundärgefässe angeordnet sind,
- eine durch eine Leitung mit einer Dosiervorrichtung verbundenen, aus einem elektrisch leitenden Material bestehenden Pipettiernadel zur Uebertragung von jeweils einem vorbestimmten Flüssigkeitsvolumen von einem Primärgefäss bzw. zu einem Sekundärgefäss,
- eine Transportvorrichtung zum gesteuerten Transport der Pipettiernadel in drei zueinander senkrechten Richtungen (X- ,Y-, Z-Richtung), wobei zwei der Transportrichtungen (X- bzw. Y-Richtung) waagerecht verlaufen und die dritte Transportrichtung (Z-Richtung) vertikal verläuft,
- eine Steuereinrichtung zur Steuerung der Dosiervorrichtung und der Transportvorrichtung,
- eine elektrische Schaltung zur Erfassung eines elektrischen Kontaktes zwischen der Spitze der Pipettiernadel und einem Bezugskörper, und
- eine mit der elektrischen Schaltung verbundene Anzeige, welche einen mit dieser Schaltung erfassten Kontakt zwischen der Pipettiernadel und dem Bezugskörpers anzeigt, wenn die Nadel eine Krümmung aufweist, welche einen solchen Kontakt ermöglicht.

Zur Prüfung der Geradlinigkeit der Pipettiernadel ist gemäss der EP-A-0555739 vorgesehen, dass der Bezugskörper, mit einem Prüfkörper verbunden ist, der eine gerade Bohrung hat, deren Durchmesser knapp etwas grösser als das Durchmesser der Pipettiernadel ist, so dass eine gerade Pipettiernadel durch die Bohrung eingeführt werden kann, ohne dass eine Berührung der Pipettiernadel mit dem Prüfkörper zustande kommt. Eine solche Berührung kann jedoch zustande kommen, falls die Pipettiernadel eine unzulässig grosse Krümmung aufweist und/oder falls die Pipettiernadel wegen einer ungenauen Justierung der Vorrichtung zum Transport der Pipettiernadel nicht genau durch die Mitte der Bohrung eingeführt wird. Zur Signalisierung einer solchen Berührung ist eine elektrische Schaltung 49 vorgesehen.

Der Erfindung liegt daher die Aufgabe zugrunde, ein Analysengerät bzw. ein Verfahren der eingangs erwähnten Art zur Verfügung zu stellen, das eine zuverlässige Prüfung der Geradlinigkeit der Pipettiernadel ermöglicht.

Der erste Teil der obigen Aufgabe wird erfindungsgemäss mit einem Analysengerät der eingangs erwähnten Art gelöst, das dadurch gekennzeichnet ist, dass_es ferner Mittel zur Führung der Spitze der Pipettiernadel um den Bezugskörper entlang eines geschlossenen Weges, der eine Fläche umfasst, in der ein Querschitt des Bezugskörpers in einer waagrechten Ebene enthalten ist, wobei die Spitze der Pipettiernadel parallel zur seitlichen Aussenfläche des Bezugskörpers und in einem bestimmten Abstand (d) davon geführt wird, welcher Abstand ein Mass für die zulässige Krümmung der Pipettiernadel in jeder der waagerechten Transportrichtungen (X- bzw. Y-Richtung) ist.

Der zweite Teil der obigen Aufgabe wird erfindungsgemäss mit einem Verfahren der eingangs erwähnten Art gelöst, das dadurch gekennzeichnet ist, dass zur Prüfung der Geradlinigkeit der Pipettiernadel die Spitze der Pipettiernadel um einen Bezugskörper entlang eines geschlossenen Weges, der eine Fläche umfasst, in der ein Querschnitt des Bezugskörpers in einer waagrechten Ebene enthalten ist, wobei die Spitze der Pipettiernadel parallel zur seitlichen Aussenfläche des Bezugskörpers und in einem bestimmten Abstand (d) davon geführt wird, welcher Abstand ein Mass für die zulässige Krümmung der Pipettiernadel in jeder der waagerechten Transportrichtungen (X- bzw. Y-Richtung) ist.

Der Hauptvorteil des erfindungsgemässen Analysengerätes bzw. des erfindungsgemässen Verfahrens liegt darin, dass dadurch eine sehr zuverlässige Prüfung der Geradlinigkeit der Pipettiernadel erreicht wird.

Ein Ausführungsbeispiel der Erfindung wird im folgenden anhand der beiliegenden Zeichnungen beschrieben. Es zeigen:

Fig. 1 eine perspektivische Ansicht eines Analysengerätes.

Fig. 2 eine Draufsicht des in Fig. 1 dargestellten Analysengerätes.

Fig. 3 eine perspektivische schematische Darstellung der Anordnung der Probegefässe, Reagenzgefässe und Reaktionsgefässe im Analysengerät 11.

Fig. 4 eine vergrösserte perspektivische Darstellung eines der Reaktionsgefässe 31 in Figuren 1-3.

Fig. 5 eine Darstellung des Reaktionsgefässes 31 in Fig. 4, die den Innenraum des Reaktionsgefässes 31 zeigt.

Fig. 6 eine schematische Darstellung einer Abtastung eines Bezugskörpers 45 mit einer Pipettiernadel 42.

Fig. 7 eine schematische Darstellung der Bewegung der Pipettiernadel 42 in einer waagerechten Richtung (X- bzw. Y- Richtung) beim Abtastvorgang gemäss Fig. 6.

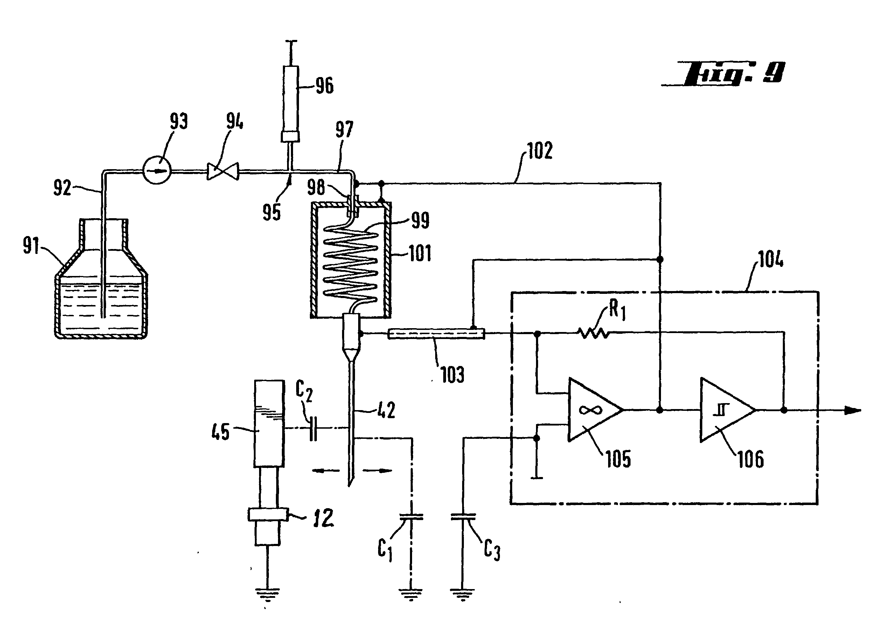

Fig. 8 eine schematische Darstellung einer Abtastung in vertikaler Richtung (Z-Richtung) der oberen Fläche eines Bezugskörpers 45 mit einer Pipettiernadel 42.

Fig. 9 eine schematische Darstellung einer Anordnung zur Messung der Kapazität zwischen der Pipettiernadel 42 und dem Bezugskörper 45.

Fig. 10 ein Ersatzschaltbild der Anordnung gemäss Fig. 9.

Fig. 11 ein Diagramm der Variation der elektrischen Kapazität zwischen der Pipettiernadel 42 und dem Bezugskörper 45.

Fig. 12 eine schematische Darstellung einer erfindungsgemässen Führung einer Pipettiernadel 42 um einen Bezugskörpers 45 zur Prüfung der Geradlinigkeit der Pipettiernadel.

Fig. 13 eine schematische Darstellung der Lage der Pipettiernadel 42 in vertikaler Richtung (Z-Richtung) bei der Führung der Pipettiernadel 42 um den Bezugskörper 45 gemäss Fig. 12.

Analysengerät

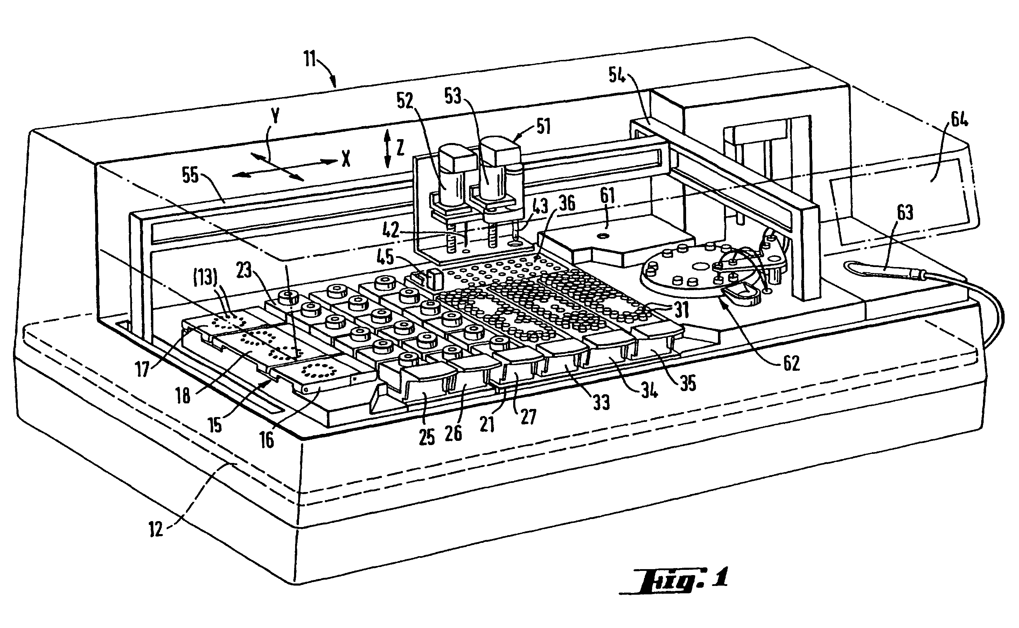

Fig. 1 zeigt eine perspektivische Ansicht eines Analysengerätes 11. Dieses Gerät enthält eine waagerecht angeordnete Grundplatte 12 auf der Primärgefässe, z.B. Probengefässe 13 bzw. Reagenzbehälter 23, und Sekundärgefässe, z.B. Reaktionsgefässe 31 angeordnet sind. Das Analysengerät 11 enthält eine automatische Pipettiereinrichtung, in der eine aus einem elektrisch leitenden Material bestehenden Pipettiernadel 42 durch eine Leitung 99 mit einer Dosiervorrichtung 96 verbunden ist. Diese Dosiervorrichtung ist z.B. eine automatisch gesteuerte Dosierspritze, die im nachstehend erwähnten Transportkopf 51 enthalten ist.

Mit der Pipettiernadel 42 wird jeweils ein vorbestimmtes Flüssigkeitsvolumen von einem Primärgefäss 13 bzw. 23 zu einem Sekundärgefäss 31 übertragen. Die Pipettiereinrichtung enthält eine Transportvorrichtung 51-55 zum gesteuerten Transport der Pipettiernadel 42 in drei zueinander senkrechten Richtungen, X- ,Y- , Z-Richtung, wobei zwei der Transportrichtungen X- bzw. Y-Richtung waagerecht verlaufen und die dritte Transportrichtung Z-Richtung vertikal verläuft. Die Transportvorrichtung enthält einen Transportkopf 51. Der Transportkopf enthält einen Antrieb 52 zum Transport der Pipettiernadel 42 in vertikaler Richtung. Vorzugsweise enthält der Transportkopf 51 ausserdem einen Antrieb 53 zum Transport eines Greifers 43 in vertikaler Richtung. Mit diesem Greifer können Reaktionsgefässe zu verschiedenen Bearbeitungspositionen transportiert werden, z.B. von einer Ladeposition, bei der die Reaktionsgefässe mit Proben und Reagenzien beschickt werden, zu einem im Analysengerät enthaltenen Inkubator 36, und von dort zu einer ebenfalls im Analysengerät enthaltenen Wascheinrichtung 62 oder zu einem Photometer 61.

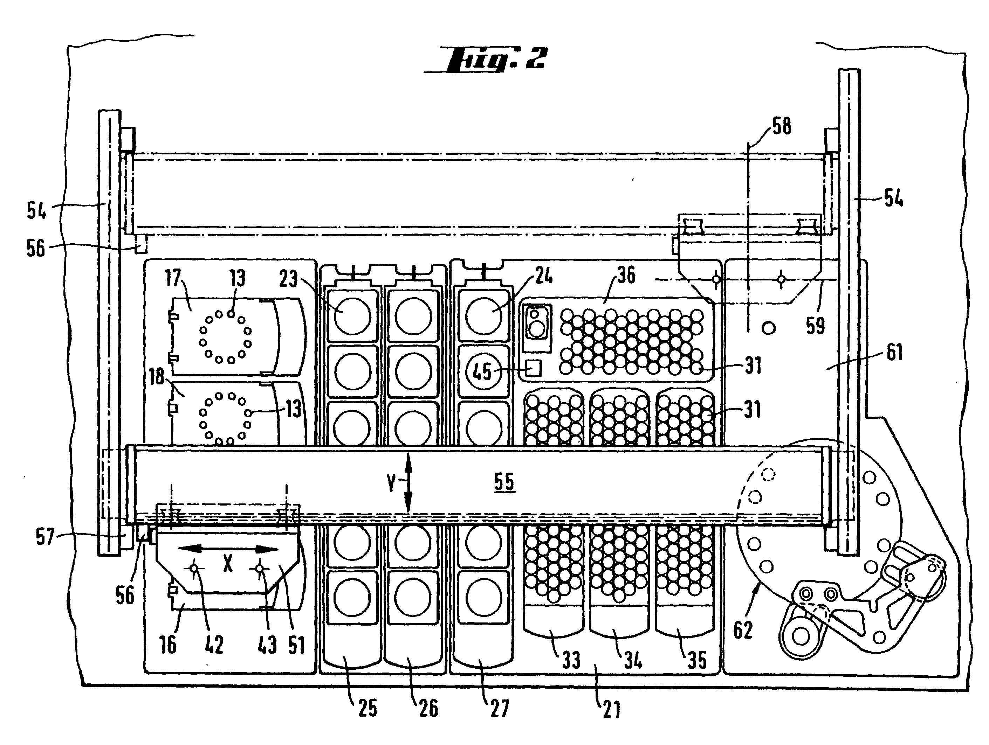

Der Transportkopf 51 ist durch einen geeigneten Antrieb in X-Richtung entlang einer Schiene 55 bewegbar. Diese Schiene 55 ist durch einen geeigneten Antrieb in Y-Richtung entlang Schienen 54 bewegbar (siehe Fig. 2). Die Schienen 54 sind auf der Grundplatte 12 befestigt.

Das Analysengerät enthält einen elektrisch leitenden Bezugskörper 45, der mit der Grundplatte 12 mechanisch und elektrisch verbunden ist, und der in jeder der waagerechten Transportrichtungen X- bzw. Y-Richtung je zwei Aussenflächen 76, 77 bzw. 78, 79 hat, die senkrecht zur Transportrichtung angeordnet sind. Der Bezugskörper 45 wird für die nachstehend beschriebene feine Justierung der Transportvorrichtung 51-55 der Pipettiernadel verwendet. Der Bezugskörper 45 ist vorzugsweise ein Vierkantbolzen mit einem quadratischen Querschnitt.

Auf der Grundplatte 12 ist eine Trägerplatte 21 angeordnet. Auf diese Trägerplatte werden verschiedene Gefässe angeordnet. Wie in Fig. 1-3 dargestellt, sind z.B. auf Trägerplatte 21 folgende Gefässe angeordnet:

- Probengefässe 13 in Probengefässhalter 16, 17, 18, die ihrerseits in einer Probengefässhaltereinheit 15 angeordnet sind,
- Reagenzgefässe 23, 24 in Reagenzgefässhalter 25, 26, 27, und

- Reaktionsgefässe 31 in Reaktionsgefässhalter 33, 34, 35.

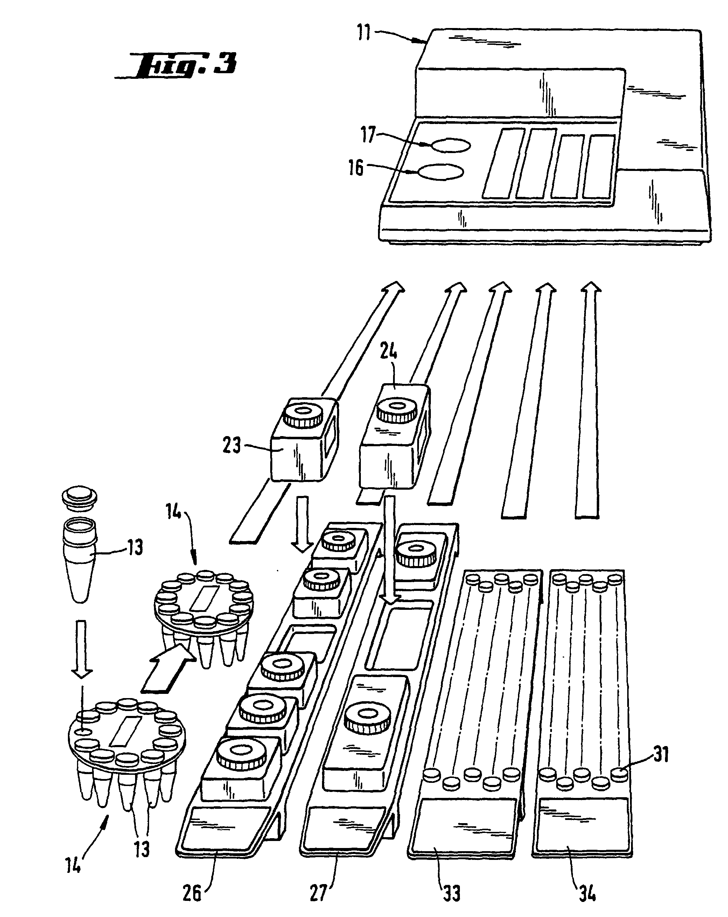

Wie in Fig. 3 gezeigt, können die Probenbehälter 13 z.B. in einer kreisförmigen Anordnung 14 angeordnet sein, die in einem der Probengefässhalter aufgenommen wird. Jedes der Probengefässe 13 hat einen Deckel, der mit der Pipettiernadel durchstechbar ist. Jeder der Probengefässhalter 16, 17, 18 hat einen Deckel, der Oeffnungen aufweist, durch die die Pipettiernadel Zugang zu den Deckeln der Probengefässe hat. Die Pipettiervorgänge werden mit verschlossenen Probengefässen durchgeführt.

Wie aus Fig. 3 ersichtlich ist jeder der Reagenzbehälter 23, 24 mit einem entsprechenden Deckel geschlossen. Auch dieser Deckel ist mit der Pipettiernadel durchstechbar. Die Pipettiervorgänge werden mit verschlossenen Reagenzgefässen durchgeführt.

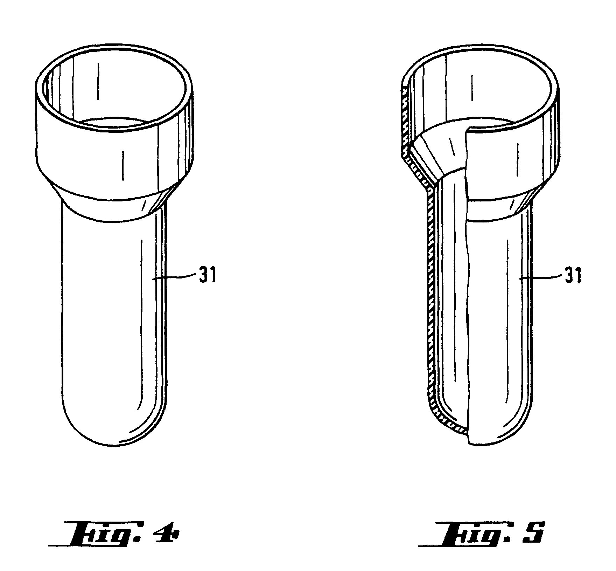

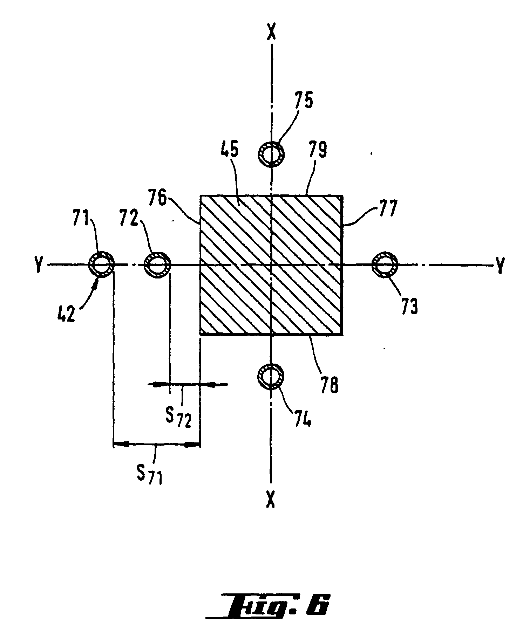

Fig. 4 zeigt eine vergrösserte perspektivische Darstellung eines der Reaktionsgefässe 31 in Figuren 1-3. Fig. 5 zeigt eine Darstellung des Reaktionsgefässes 31 in Fig. 4, die den Innenraum des Reaktionsgefässes zeigt.

Steuereinheit des Analysengeräts

Sämtliche durchzuführende Operationen, u.a. die Steuerung der Dosiervorrichtung 96 und der Transportvorrichtung 51-55 sind durch eine zentrale Steuereinheit (nicht dargestellt) des Analysengeräts gesteuert und koordiniert. Eine Bedienoberfläche 64 bzw. Tastatur zur Eingabe von Prozessparametern, sowie eine Anzeige zur Anzeige von Prozesszuständen ist schematisch dargestellt. Die Probendaten, welche beispielsweise mittels Barcode auf den Proberöhrchen aufgebracht sind, können über einen manuell geführten Lesestift oder Scanner 63 in einen Speicher eingelesen werden. Schnittstellen einen Printer usw. (nicht dargestellt) sind vorgesehen.

Mittel zur Justierung der Transportvorrichtung 51-55

Die nachstehend beschriebenen Ausführungsformen des Analysengerätes 11 enthalten Mittel zur groben Justierung der Transportvorrichtung 51-55 der Pipettiernadel 42. Hierfür werden z.B. Mittel verwendet, mit denen die Pipettiernadel 42 zu einer Endposition geführt wird und die Koordinaten (Xe, Ye, Ze) der Endposition der Pipettiernadel in jeder der drei zueinander senkrechten Richtungen erfasst und gespeichert werden. Die Endposition der Pipettiernadel 42 in X- bzw. Y-Richtung ist durch die entsprechende Endposition des Transportkopfes 51 definiert. In Fig. 2 wird der Transportkopf 51 in seiner Endposition in X- und Y-Richtung gezeigt. Die Endposition des Transportkopfes 51 in X-Richtung wird durch geeignete Mittel erfasst, wenn der Transportkopf 51 den - Anschlag 56 erreicht. Die Endposition des Transportkopfes 51 in Y-Richtung wird durch geignete Mittel erfasst, wenn der Transportkopf 51 den Anschlag 57 erreicht. Die höchstmögliche Lage der Pipettiernadel, die deren Antrieb 52 ermöglicht, definiert die Endposition der Pipettiernadel in Z-Richtung. Die Erreichung der Endposition des Transportkopfs 51 in jeder Transportrichtung wird durch geeignete Mittel erfasst, z.B. durch ein elektrisches Signal, das durch den Kontakt zwischen dem Transportkopf 51 und einem Anschlag ausgelöst und das an die Steuereinheit des Analysengerätes übermittelt wird.

In Fig. 2 wird durch gestrichelte Linien die Grundstellung 58 des Transportkopfes 51 in X-Richtung und die Grundstellung 59 der Schiene 55 in Y-Richtung dargestellt.

Das Analysengerät 11 enthält ferner folgende Mittel zur feinen, d.h. sehr genauen Justierung der Transportvorrichtung 51-55:

- eine Schaltung zur Messung der elektrischen Kapazität zwischen der Pipettiernadel 42 und dem Bezugskörper 45, und

- Mittel zur Bestimmung der Koordinaten einer Bezugsposition der Pipettiernadel 42 in wenigstens einer der waagerechten Transportrichtungen X- bzw. Y-Richtung, wobei diese Mittel dazu geeignet sind, die Transportvorrichtung 51-55 der Pipettiernadel 42 so zu bewegen, dass die Pipettiernadel 42 in entgegengesetzten Richtungen zu je einer Position in der nähe jeder der beiden Aussenflächen 76-79 des Bezugskörpers 45 bewegt wird, die senkrecht zur Transportrichtung angeordnet sind, wobei die Pipettiernadel 42 jeweils zu einer Fläche des Bezugskörpers 45 hin bewegt wird, bis der mit der Schaltung gemessene Wert der elektrischen Kapazität zwischen der Pipettiernadel 42 und dem Bezugskörper 45 einen vorbestimmten Wert erreicht, der einem bestimmten Abstand zwischen der Pipettiernadel 42 und der Fläche des Bezugskörpers 45 entspricht.

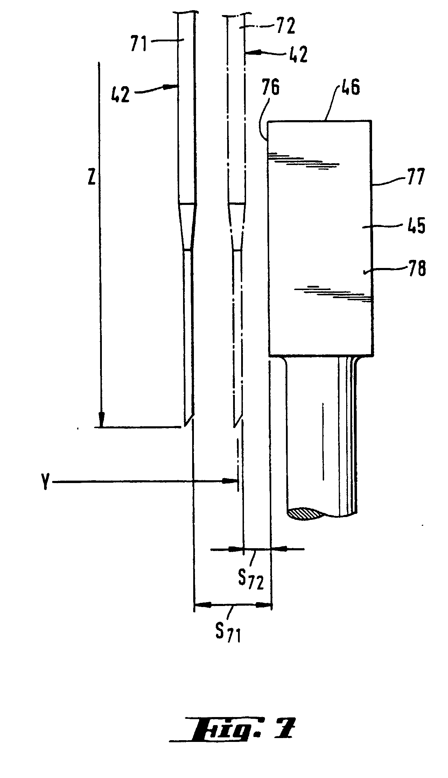

Wie in Fig. 6 dargestellt, hat der abgetastete Bereich des Bezugskörpers 45 in einer zur Längsachse des Bezugskörpers 45 senkrechten Ebene vorzugsweise einen quadratischen Querschnitt.

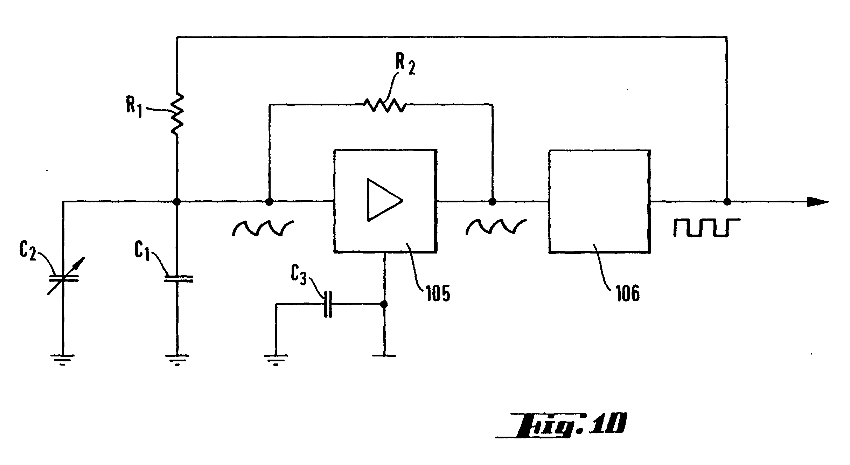

Der elektrische Widerstand der Flüssigkeit, die in der Leitung 99 enthalten ist, die die Pipettiernadel 42 mit dem Dosiersystem 96 verbindet (siehe Fig. 9), ist vorzugsweise grösser als ein vorbestimmter Grenzwert.

1. Bevorzugte Ausführungsform der Mittel zur feinen Justierung der Transportvorrichtung 51-55

Eine erste bevorzugte Ausführungsform des Analysengeräts enthält ferner folgende Mittel:

- Mittel zur Erfassung und Speicherung der Koordinatenwerte der zwei so definierten Positionen der Pipettiernadel 42 in wenigstens einer waagerechten Transportrichtung X- bzw. Y-Richtung, und

- Mittel zur Ermittlung der Koordinaten einer Bezugsposition in der Transportrichtung durch Berechnung des Mittelwertes der zwei erfassten Koordinatenwerte.

Nach der Bestimmung der Koordinaten der Bezugsposition werden die X- bzw. Y-Koordinaten aller Pipettierpositionen der Pipettiernadel in Bezug auf die Koordinaten der Bezugsposition anhand der relevanten Dimensionen der verschiedenen Teile des Analysengerätes in der oben erwähnten Steuereinheit errechnet.

2. Bevorzugte Ausführungsform der Mittel zur feinen Justierung der Transportvorrichtung 51-55

Eine zweite bevorzugte Ausführungsform des Analysengeräts enthält Mittel zur Bestimmung der Koordinaten Xo, Yo einer Bezugsachse, die parallel zur vertikalen Transportrichtung Z und durch den Bezugskörper 45 verläuft, wobei diese Mittel dazu geeignet sind, die Transportvorrichtung 51-55 der Pipettiernadel 42 so zu bewegen, dass die Pipettiernadel 42 in beiden waagerechten Transportrichtungen (X- bzw. Y-Richtung) und in entgegengesetzten Richtungen zu je einer Position in der Nähe jeder der beiden Aussenflächen 76-79 des Bezugskörpers 45 bewegt wird, die senkrecht zur Transportrichtung angeordnet sind, wobei die Pipettiernadel 42 jeweils zu einer Fläche des Bezugskörpers 45 hin bewegt wird, bis der mit der Schaltung gemessene Wert der elektrischen Kapazität zwischen der Pipettiernadel 42 und dem Bezugskörper 45 einen vorbestimmten Wert erreicht, der einem bestimmten Abstand zwischen Pipettiernadel 42 und der Fläche des Bezugskörpers 45 entspricht.

Nach der Bestimmung der Koordinaten Xo, Yo der oben erwähnten Bezugsachse werden die X- bzw. Y-Koordinaten aller Pipettierpositionen der Pipettiernadel in Bezug auf Xo, Yo anhand der relevanten Dimensionen der verschiedenen Teile des Analysengerätes in der oben erwähnten Steuereinheit errechnet.

Diese zweite bevorzugte Ausführungsform enthält vorzugsweise zusätzlich folgende Mittel:

- Mittel zur Erfassung und Speicherung der Koordinatenwerte der zwei so definierten Positionen der Pipettiernadel 42 in jeder der waagerechten Transportrichtungen (X- bzw. Y-Richtung), und
- Mittel zur Ermittlung der Koordinatenwerte einer Bezugsposition in jeder der waagerechten Transportrichtungen (X- bzw. Y-Richtung) durch Berechnung des Mittelwertes der zwei erfassten Koordinatenwerte.

Schaltung zur Messung der Kapazität zwischen Pipettiernadel und Bezugskörper (Fig. 9, 10, 11)

Zur Messung der elektrischen Kapazität zwischen Pipettiernadel 42 und Bezugskörper 45 wird eine Schaltung gemäss Fig. 9 verwendet, die im Analysengerät ausserdem als Teil einer Niveau-Fühleinrichtung ("level detector") verwendet wird. Mit einer solchen Niveau-Fühleinrichtung wird die Eintauchtiefe der Pipettiernadel bei den Pipettiervorgängen (z.B. bei der Entnahme eines Probevolumens aus einem Probengefäss) durch eine Messung der elektrischen Kapazität zwischen der Pipettiernadel und der Oberfläche der flüssigen Probe so gesteuert, dass nur ein sehr kurzes Segment der Spitze der Pipettiernadel in die flüssige Probe eindringt und somit die an der Aussenfläche der Pipettiernadel unerwünschterweise mitgenommene Probenmenge möglichst klein ist. Dabei hat die Pipettiernadel neben ihrer eigenen Funktion als Teil der Pipettiervorrichtung, die zusätzliche Funktion ein Teil der elektrischen Messschaltung zu sein, mit der die elektrische Kapazität zwischen der Pipettiernadel und der Oberfläche der flüssige Probe gemessen wird.

Wie aus Fig. 9 ersichtlich, ist die Pipettiernadel 42 durch einen Schlauch 99, ein Verbindungsstück 98 und ein T-Glied 95 mit einer Dosierspritze 96 und durch ein Ventil 94, eine Pumpe 93 und eine Leitung 92 in flüssiger Verbindung mit der Flüssigkeit in einem Flüssigkeitsbehälter 91. Alle diese Komponenten bilden ein Flüssigkeitssystem, das während des Betriebs der Pipettiervorrichtung mit der im Flüssigkeitsbehälter 91 enthaltene Flüssigkeit gefüllt ist. Im vorliegenden Ausführungsbeispiel weist diese Flüssigkeit eine gute elektrische Leitfähigkeit auf.

Der Schlauch 99 ist in einem Abschirmgehäuse 101 ("guarding case") angeordnet. Der Verbindungsstück 98 ist mechanisch und elektrisch mit dem Abschirmgehäuse 101 und mit der Flüssigkeit in der Leitung 97 verbunden.

Wie ebenfalls aus Fig. 9 ersichtlich, ist die Pipettiernadel 42 durch den Innenleiter eines Koaxialkabels 103 mit dem Eingang einer Oszillatorschaltung 104 elektrisch verbunden. Die Oszillatorschaltung 104 enthält einen Impedanzwandler 105 und einen daran angeschlossenen Spannungskomparator 106. Ein Kopplungswiderstand $R_1$ verbindet den Ausgang des Spannungskomparators 106 mit dem Eingang des Impedanzwandlers 105. Die elektrische Verbindung des Ausgangs des Impedanzwandlers 105 mit dem Spannungskomparator 106 ist mit dem Aussenleiter des Koaxialkabels 103 und über eine Leitung 102 ("guard") mit dem Abschirmgehäuse 101 und mit der Flüssigkeit in der Leitung 97 elektrisch verbunden. Das Abschirmgehäuse 101 ("guarding case") und die Leitung 102 ("guard") dienen dazu, die Schaltung zur Messung der Kapazität $C_2$ zwischen der Pipettiernadel 42 und dem Bezugskörper 45 vom oben erwähnten Flüssigkeitsystem der Pipettiereinrichtung elektrisch zu entkoppeln. Auf diese Weise wird die Funktion der Schaltung zur Messung der Kapazität $C_2$ zwischen der Pipettiernadel 42 und dem Bezugskörper 45 gegen Streukapazitäten unempfindlich gemacht, die sonst durch die mechanische und flüssige Verbindung der Pipettiernadel 42 mit dem oben erwähnten Flüssigkeitsystem die Funktion der Messschaltung beeinflussen würden.

Wie in Fig. 9 schematisch dargestellt, ist der Bezugskörper 45 direkt mit einer Grundplatte 12 des Analysengeräts (siehe Fig. 1) mechanisch und elektrisch verbunden. Elektrisch ist die Grundplatte 12 mit der Erde verbunden.

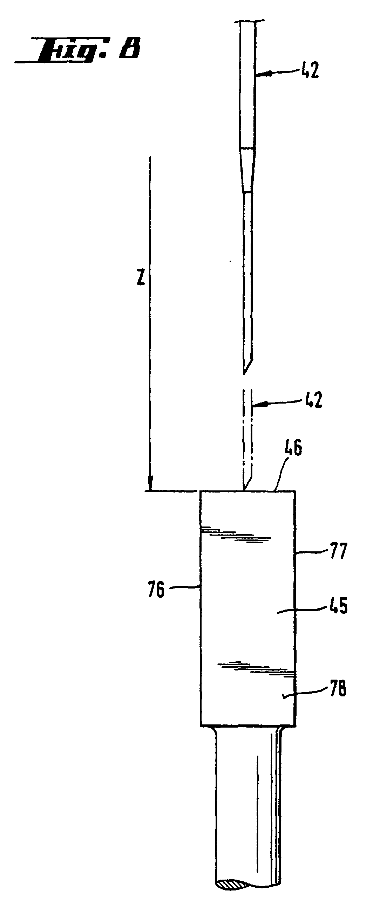

In Fig. 9 stellt $C_2$ die Kapazität zwischen der Pipettiernadel 42 und dem Bezugskörper 45 dar. $C_3$ stellt die Kapazität zwischen der Masse der Oszillatorschaltung 104 und Erde dar. $C_1$ stellt die Kapazität zwischen der Pipettiernadel 42 und Erde dar, wenn die Pipettiernadel in einer bestimmten vertikalen Lage befindet, z.B. in der in Fig. 7 dargestellten Lage, aber so weit vom Bezugskörper 45 entfernt, dass $C_2$ praktisch den Wert Null hat. Im vorliegenden Beispiel ist $C_1$= 4 Picofarad.

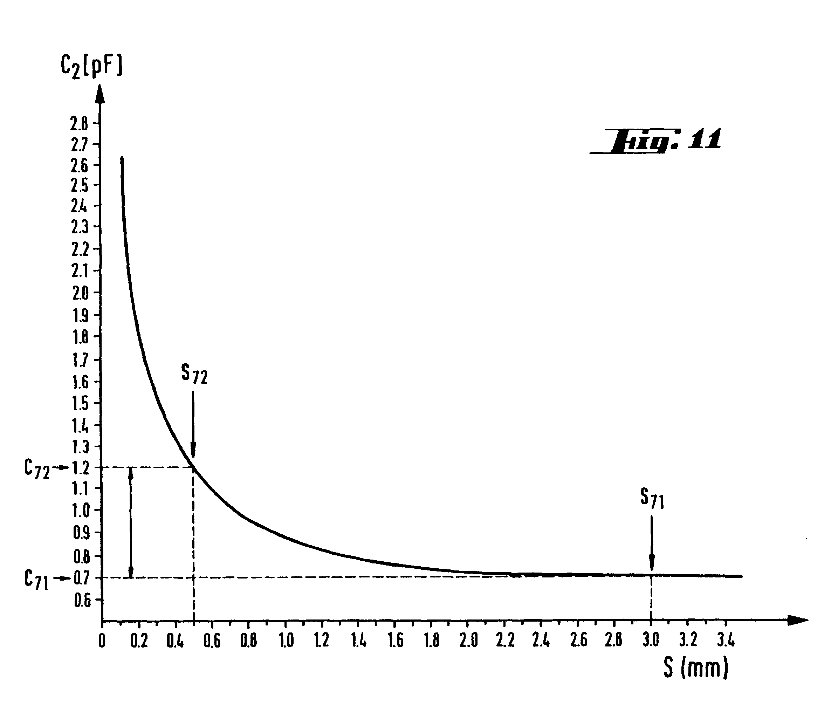

Fig. 10 zeigt ein Ersatzschalbild der Anordnung gemäss Fig. 9. In Fig. 10 stellt $R_2$ der elektrische Widerstand der Flüssigkeit im Schlauch 99 in Fig. 9 dar.

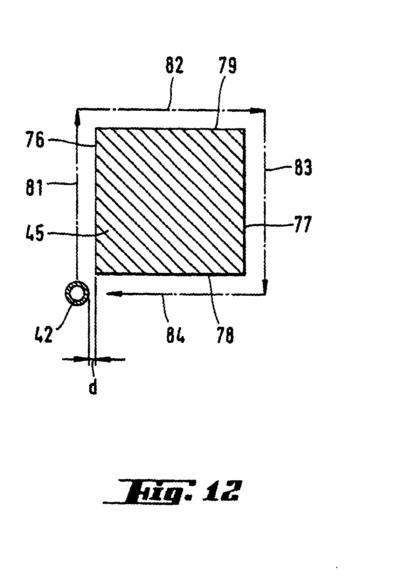

Fig. 11 zeigt die Variation der Kapazität $C_2$ in Picofarad in Funktion des Abstands zwischen der Pipettiernadel 42 und dem Bezugskörper 45.

Die Schwingungsfrequenz f des Oszillators 104 ist durch folgende Formel gegeben

$$f = 1/T = 1/2 * R_1 (C_1 + C_2)$$

Die Schwingungsfrequenz f des Oszillators 104 ist z.B. f =120 Kilohertz wenn $R_1$= 1 Megaohm, $C_1$ = 4 Picofarad und $C_2$ = 0 Picofarad.

Selbstverständlich kann f andere Werte haben. Erheblich höhere Werte von f, z.B. im Megahertzbereich, sind nachteilig, weil der Einfluss von Störsignalen zu gross wird. Erheblich niedrigere Werte von f sind ebenfalls nachteilig, weil für die Auswertung des Ausgangssignals der Oszillatorschaltung mehr Zeit benötigt wird.

Fig. 10 zeigt u.a. die Wellenformen an 3 Punkten des dort dargestellten Ersatzschaltbildes der Oszillatorschaltung 104 gemäss Fig. 9. Die Wellenform am Eingang bzw. Ausgang des Impedanzwandlers 105 ist darauf zurückzuführen, dass der RC-Glied der Oszillatorschaltung mit einer Zeitkostante t dauernd geladen und entladen wird, wobei $t= 2 * R_1 (C_1 + C_2)$.

Wenn die Pipettiernadel 42 sich einer der seitlichen Aussenflächen des Bezugskörpers 45 nähert, nimmt der Wert von $C_2$ gemäss Fig. 11 zu, und dies führt zu einer entsprechenden Aenderung des Wertes von f. Durch Messung der Frequenz f des Signals am Ausgang des Spannungskomparators 106 ist es daher möglich den Wert von $C_2$ zu messen und damit der entsprechende Abstand zwischen der Pipettiernadel 42 und der seitlichen Aussenflächen des Bezugskörpers 45 zu bestimmen. Hierfür wird vorher der Wert von $C_2$ für eine bestimmte Position der Pipettiernadel 42 im Analysengerät 11 gemessen. Diese bestimmte Position der Pipettiernadel ist z.B. die in Figuren 6 und 7 gezeigte Position 71, bei der der Abstand $S_{71}$ zwischen der Pipettiernadel 42 und dem Bezugskörper 45 drei Millimeter beträgt. Der entsprechende Wert von $C_2$ wird in Fig. 11 mit $C_{71}$ bezeichnet.

Für eine geeignete Funktion des Impedanzwandlers 105 ist es wichtig, dass der Widerstand $R_2$ der Flüssigkeit im Schlauch 99 einen Grenzwert von 100 Kiloohm nicht unterschreitet. Andernfalls würde $R_2$ den Impedanzwandler 105 zu stark belasten. Ein zu niedriger Wert von $R_2$ kann daraus resultieren, dass die Flüssigkeit im Flüssigkeitssystem der Pipettiervorrichtung einen sehr niedrigen spezifischen elektrischen Widerstand hat. Durch geeignete Wahl der Parameter, die den Wert von $R_2$ bestimmen, kann jedoch ein Wert dieses Widerstandes erzielt werden, der die obige Bedingung erfüllt.

Der Wert von $R_2$ ist gegeben durch $R_2 = r * l * 4 / \pi d^2$, worin

r = spezifischer elektrischer Widerstand der Flüssigkeit im Schlauch 99

l = Länge des Schlauches 99

d = Innendurchmesser des Schlauches 99

Mit r = 0.26 Ohm $*$ Meter, l = 0.76 Meter und d = 0.76 Millimeter ist $R_2$ = 436 Kiloohm.

Funktionsweise des Analysengerätes

Mit einem Analysengerät wird die Pipettiernadel 42 der automatischen Pipettiervorrichtung des Analysengerätes 11 zu einer Anzahl Pipettierpositionen mittels einer Transportvorrichtung 51-55 geführt, wobei jede Pipettierposition der Position eines bestimmten Gefässes entspricht, wobei die Transportvorrichtung 51-55 dazu eingerichtet ist, die Pipettiernadel 42 in drei zueinander senkrechten Richtungen (X-, Y-, Z-Richtungen) zu bewegen, und wobei jede dieser Richtungen parallel zu einer der Koordinatenachsen des Koordinatensystems der Transportvorrichtung 51-55 ist.

Vor der nachstehend beschriebenen feinen Justierung der Transportvorrichtung 51-55 der Pipettiernadel wird eine grobe Justierung der Transportvorrichtung 51-55 der Pipettiernadel 42 durchgeführt. Dafür wird die Pipettiernadel 42 mit der Transportvorrichtung 51-55 zu den oben definierten Endposition in jeder der drei zueinander senkrechten Richtungen geführt und die Koordinaten $(X_e, Y_e, Z_e)$ der Endposition werden erfasst und gespeichert .

Zur feinen, d.h. genauen Justierung der Transportvorrichtung 51-55 der Pipettiernadel werden Koordinaten von Bezugspunkten ermittelt. Dafür wird der elektrisch leitende Bezugskörper 45 verwendet, der mit der Grundplatte 12 mechanisch und elektrisch verbunden ist, und der in jeder der waagerechten Transportrichtungen (X- bzw. Y-Richtung) je zwei Aussenflächen 76-79 hat, die senkrecht zur Transportrichtung angeordnet sind.

Zur feinen, d.h. genauen Justierung der Transportvorrichtung 51-55 der Pipettiernadel werden folgende Verfahrensschritte durchgeführt:

- die elektrische Kapazität $C_2$ zwischen der Pipettiernadel 42 und dem Bezugskörper 45 wird mit der oben beschriebene Schaltung gemessen, wobei als erstes der Wert von $C_2$ für eine bestimmte Position 71 der Pipettiernadel 42 im Analysengerät 11 gemessen wird. Diese bestimmte Position der Pipettiernadel ist z.B. die in Figuren 6 und 7 gezeigte Position 71, bei der der Abstand $S_{71}$ zwischen der Pipettiernadel 42 und dem Bezugskörper 45 drei Millimeter beträgt. Der entsprechende Wert von $C_2$ wird in Fig. 11 mit $C_{71}$ bezeichnet. Wie aus Fig. 11 ersichtlich, ist z.B. $C_{71} = 0.7$ Picofarad, und

- zur Bestimmung der Koordinaten einer Bezugsposition der Pipettiernadel 42 in wenigstens einer der waagerechten Transportrichtungen (X- bzw. Y-Richtung), wird die Pipettiernadel 42 mit der Transportvorrichtung 51-55 in entgegengesetzten Richtungen zu je einer Position in der nähe jeder der beiden Aussenflächen 76, 77 bzw. 78, 79 des Bezugskörpers 45 bewegt, die senkrecht zur Transportrichtung angeordnet sind. Dabei wird die Pipettiernadel 42 z.B. in Y-Richtung zuerst zu einer Aussenfläche 76 des Bezugskörpers 45 hin bewegt, bis die Pipettiernadel eine Position 72 erreicht, bei der der gemessene Wert der elektrischen Kapazität $C_2$ zwischen der Pipettiernadel 42 und dem Bezugskörper 45 einen vorbestimmten Wert $C_{72}$ erreicht, der einem bestimmten Abstand $S_{72}$ zwischen der Pipettiernadel 42 und der Aussenfläche 76 des Bezugskörpers 45 entspricht. Die Koordinate der Position 72 in Y-Richtung ist $Y_{72}$. Anschliessend wird dieser Vorgang in entgegengesetzter Richtung durchgeführt, d.h. die Pipettiernadel 42 wird in Y-Richtung zu einer Fläche 77 des Bezugskörpers 45 hin bewegt, bis die Pipettiernadel eine Position 73 erreicht, bei der der gemessene Wert der elektrischen Kapazität $C_2$ zwischen der Pipettiernadel 42 und dem Bezugskörper 45 einen vorbestimmten Wert $C_{73}$ erreicht, der einem bestimmten Abstand $S_{73}$ zwischen der Pipettiernadel 42 und der Aussenfläche 77 des Bezugskörpers 45 entspricht. Die Koordinate der Position 73 in Y-Richtung ist $Y_{73}$. Im Rahmen der Erfindung ist vorzugsweise $C_{73} = C_{72}$ und $S_{73} = S_{72}$. Wie aus Fig. 11 ersichtlich, ist z.B. $C_{73} = C_{72} = 1.2$ Picofarad.

Beim soeben beschriebenen Verfahren sowie bei den nachstehend beschriebenen Ausführungsformen befindet sich die Pipettiernadel während ihrer geführten Bewegung gegen eine der seitlichen Aussenflächen des Bezugskörpers 45 vorzugsweise in der in Fig. 7 gezeigten vertikalen Lage (d.h. in Z-Richtung), bei der ein erheblicher Teil der Pipettiernadel gegenüber der Aussenfläche liegt. Auf diese Weise wird erreicht, dass die Kapazität $C_2$ einen ausreichend hohen Wert hat. Ausserdem wird durch die soeben erwähnte vertikale Lage der Pipettiernadel gemäss Fig. 7 erreicht, dass die Genauigkeit der Justierung insbesondere für den oberen Teil der Pipettiernadel sehr hoch ist, d.h. durch die Justierung wird der obere Teil der Pipettiernadel mit höchster Genauigkeit an den verschiedenen Pipettierpositionen positioniert. Im vorliegenden Ausführungsbeispiel bringt dies den zusätzlichen Vorteil, dass der vom Transportkopf 51 getragene bzw. geführte Greifer 43 ebenfalls mit höchster Genauigkeit an den verschiedenen Positionen positioniert wird, wo er die Reaktiongefässe 31 fasst bzw. bringt.

Nach der Bestimmung der Koordinaten einer Bezugsposition der Pipettiernadel in X- bzw. Y-Richtung einschliesslich der feinen Justierung in wenigstens einer der waagerechten Transportrichtungen (X- bzw. Y-Richtung) wird eine Bezugsposition in Z-Richtung definiert, in dem die Pipettiernadel 42 von ihrer Ausgangslage in höchster Stellung und mit abnehmender Geschwindigkeit gegen die Mitte der oberen Fläche 46 des Bezugskörpers 45 bewegt wird, bis die Spitze der Pipettiernadel die Fläche 46 berührt und dieser Kontakt mit einer geeigneten Schaltung erfasst wird. Die so bestimmte Bezugsposition der Pipettiernadel in Z-Richtung wird gespeichert.

### 1. Bevorzugte Ausführungsform des Verfahrens zur feinen Justierung der Transportvorrichtung 51-55

In einer ersten bevorzugten Ausführungsform des Verfahrens zur feinen Justierung der Transportvorrichtung 51-55 werden ferner die Koordinatenwerte der zwei so definierten Positionen der Pipettiernadel 42 in der wenigstens einer waagerechten Transportrichtung erfasst und gespeichert. Durch Berechnung des Mittelwertes der zwei erfassten Koordinatenwerte, z.B. $Y_{72}$ und $Y_{73}$, werden die Koordinatenwerte einer Bezugsposition in der wenigstens einer waagerechten Transportrichtung ermittelt .

Die Bestimmung der Positionen 71 und 73 auf entgegengesezten Seiten des Bezugskörpers 45 und die soeben erwähnte Berechnung des Mittelwertes der zwei erfassten Koordinatenwerte bringen den Vorteil, dass dadurch die Symmetrie des Bezugskörpers ausgenützt wird, um den Einfluss allfälliger Ungenauigkeiten der Kapazitätsmessung auf die errechnete Koordinatenwerte der Bezugsposition zu eliminieren.

Nach der Bestimmung der Koordinaten der Bezugsposition werden die X- bzw. Y-Koordinaten aller Pipettierpositionen der Pipettiernadel in Bezug auf die Koordinaten der Bezugsposition anhand der relevanten Dimensionen der verschiedenen Teile des Analysengerätes in der oben erwähnten Steuereinheit errechnet.

2. Bevorzugte Ausführungsform des Verfahrens zur feinen Justierung der Transportvorrichtung 51-55

In einer zweiten bevorzugten Ausführungsform des Verfahrens zur feinen Justierung der Transportvorrichtung 51-55 werden die Koordinaten Xo, Yo einer Bezugsachse bestimmt, die parallel zur vertikalen Transportrichtung (Z) und durch den Bezugskörper 45 verläuft. Dafür wird die Pipettiernadel 42 mittels der Transportvorrichtung 51-55 in beiden waagerechten Transportrichtungen (X- bzw. Y-Richtung) zu je einer Position in der Nähe jeder der beiden Aussenflächen 76-79 des Bezugskörpers 45 bewegt, die senkrecht zur Transportrichtung angeordnet sind, wobei die Pipettiernadel 42 jeweils zu einer Fläche des Bezugskörpers 45 hin bewegt wird, bis der gemessene Wert der elektrischen Kapazität zwischen der Pipettiernadel 42 und dem Bezugskörper 45 einen vorbestimmten Wert erreicht, der einem bestimmten Abstand zwischen Pipettiernadel 42 und der Fläche des Bezugskörpers 45 entspricht.

Im Rahmen dieses Verfahrens wird z.B. neben der oben bereits beschriebenen Erfassung von bestimmten Bezugspunkten der Pipettiernadel in Y-Richtung das gleiche Verfahren in X-Richtung durchgeführt. Hierfür wird die Pipettiernadel zuerst zu einer Fläche 78 des Bezugskörpers 45 hin bewegt wird, bis der gemessene Wert der elektrischen Kapazität zwischen der Pipettiernadel 42 und dem Bezugskörper 45 einen vorbestimmten Wert $C_{74}$ erreicht, der einem bestimmten Abstand $S_{74}$ zwischen der Pipettiernadel 42 und der Fläche des Bezugskörpers 45 entspricht, anschliessend wird dieser Vorgang in entgegengesetzter Richtung durchgeführt, d.h. die Pipettiernadel 42 wird in X-Richtung zu einer Fläche 79 des Bezugskörpers 45 hin bewegt, bis der gemessene Wert der elektrischen Kapazität zwischen der Pipettiernadel 42 und dem Bezugskörper 45 einen vorbestimmten Wert $C_{75}$ erreicht, der einem bestimmten Abstand $S_{75}$ zwischen der Pipettiernadel 42 und der Fläche des Bezugskörpers 45 entspricht. Im Rahmen der Erfindung ist vorzugsweise $C_{74}= C_{75}= C_{73}= C_{72}$ und $S_{74}= S_{75} = S_{73} = S_{72}$.

In dieser zweiten bevorzugten Ausführungsform des Verfahrens zur feinen Justierung der Transportvorrichtung 51-55 werden vorzugsweise die Koordinatenwerte der zwei so definierten Positionen der Pipettiernadel 42 in jeder der waagerechten Transportrichtungen erfasst und gespeichert. Durch Berechnung des Mittelwertes der zwei erfassten Koordinatenwerte werden die Koordinatenwerte einer Bezugsposition in jeder der waagerechten Transportrichtungen ermittelt .

Nach der Bestimmung der Koordinaten Xo, Yo der oben erwähnten Bezugsachse werden die X- bzw. Y-Koordinaten aller Pipettierpositionen der Pipettiernadel in Bezug auf Xo, Yo anhand der relevanten Dimensionen der verschiedenen Teile des Analysengerätes in der oben erwähnten Steuereinheit errechnet.

Anordnung zur Prüfung der Geradlinigkeit der Pipettiernadel

Unabhängig von der Vorrichtung und dem Verfahren, die für die genaue Justierung der Transportvorrichtung der Pipettiernadel verwendet werden, ist im oben beschriebenen Analysengerät eine Anordnung vorgesehen, die eine Prüfung der Geradlinigkeit der Pipettiernadel ermöglicht. Diese Anordnung enthält folgende Mittel:

- Mittel zur Führung der Spitze der Pipettiernadel 42 um den Umfang des oberen Randes eines Bezugskörpers 45, wobei die Spitze der Pipettiernadel 42 in einem bestimmten Abstand d vom oberen Rand geführt wird, welcher Abstand ein Mass für die zulässige Krümmung der Pipettiernadel ist,
- eine elektrische Schaltung zur Erfassung eines elektrischen Kontaktes zwischen der Spitze der Pipettiernadel 42 und dem Bezugskörper 45, und
- eine mit dieser Schaltung verbundene Anzeige, welche im Ansprechen auf ein Ausgangssignal der Schaltung zur Erfassung eines elektrischen Kontaktes zwischen der Spitze der Pipettiernadel 42 und dem Bezugskörper 45 eine unzulässige Krümmung der Pipettiernadel anzeigt.

Diese Anordnung wird vorzugsweise in Kombination mit den oben beschriebenen Mittel zur Justierung der Transportvorrichtung 51-55 der Pipettiernadel 42 verwendet.

Verfahren zur Prüfung der Geradlinigkeit der Pipettiernadel

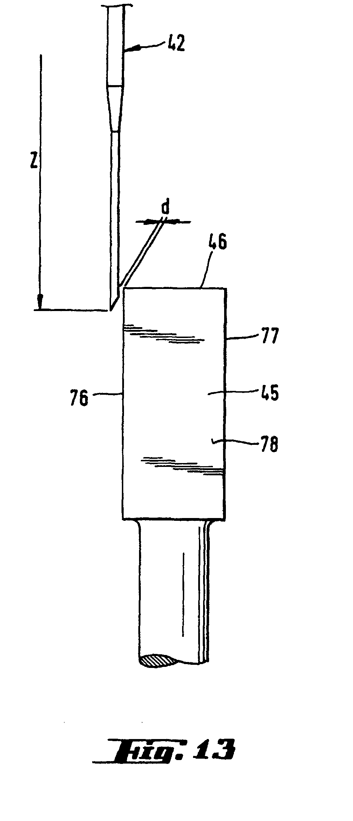

Nach einer genauen Justierung der Transportvorrichtung 51-55 und der Pipettiernadel 42, die vorzugsweise mit dem oben beschriebenen Verfahren durchgeführt wird, wird die Geradlinigkeit der Pipettiernadel 42 mit dem folgenden Verfahren geprüft. Wie anhand der Figuren 12 und 13 dargestellt, wird dabei die Spitze der Pipettiernadel 42 um den Umfang des oberen Randes eines Bezugskörpers 45 entlang eines Weges 81, 82, 83, 84 geführt, wobei die Spitze der Pipettiemadel 42 in einen bestimmten Abstand d vom Rand des Bezugskörpers 45 geführt wird, welcher Abstand ein Mass für die zulässige Krümmung der Pipettiernadel ist. Der Abstand d beträgt z.B. 0.45 Millimeter. Die vertikale Lage der Pipettiernadel in Bezug auf den Bezugskörper ist dabei wie in Fig. 13 dargestellt. Eine allfällige Berührung des Bezugskörpers 45 mit der Pipettiernadel 42 wird mittels einer elektrischen Schaltung erfasst, die in einem solchen Fall eine Anzeige einer unzulässigen Krümmung der Pipettiernadel bewirkt.

**Patentansprüche**

1. Analysengerät, das folgende Komponenten enthält:

   a) eine waagerecht angeordnete Grundplatte (12) auf der Primärgefässe (13 bzw. 23) und Sekundärgefässe (31) angeordnet sind,

   b) eine durch eine Leitung (99) mit einer Dosiervorrichtung (96) verbundenen, aus einem elektrisch leitenden Material bestehenden Pipettiernadel (42) zur Uebertragung von jeweils einem vorbestimmten Flüssigkeitsvolumen von einem Primärgefäss (13 bzw. 23) zu einem Sekundärgefäss (31),

   c) eine Transportvorrichtung (51-55) zum gesteuerten Transport der Pipettiernadel (42) in drei zueinander senkrechten Richtungen (X-, Y-, Z-Richtung), wobei zwei der Transportrichtungen (X-,Y-Richtung) waagerecht verlaufen und die dritte Transportrichtung (Z-Richtung) vertikal verläuft,

   d) einen elektrisch leitenden Bezugskörper (45), der mit der Grundplatte (12) mechanisch und elektrisch verbunden ist und in jeder der waagerechten Transportrichtungen (X- bzw. Y-Richtung) zwei Aussenflächen (76, 77 bzw. 78, 79) hat, die senkrecht zur Transportrichtung angeordnet sind,

   e) eine Steuereinrichtung zur Steuerung der Dosiervorrichtung (96) und der Transportvorrichtung (51-55),

   f) eine elektrische Schaltung zur Erfassung eines elektrischen Kontaktes zwischen der Spitze der Pipettiernadel (42) und dem Bezugskörper (45), und

   g) eine mit der elektrischen Schaltung verbundene Anzeige, welche einen mit dieser Schaltung erfassten Kontakt zwischen der Pipettiernadel (42) und dem Bezugskörper (45) anzeigt, wenn die Nadel eine Krümmung aufweist, welche einen solchen Kontakt ermöglicht,

   **dadurch gekennzeichnet, dass** es ferner Mittel zur Führung der Spitze der Pipettiernadel (42) um den Bezugskörper (45) entlang eines geschlossenen Weges (81, 82, 83, 84) enthält der eine Fläche umfasst, in der ein Querschnitt des Bezugskörpers in einer waagrechten Ebene enthalten ist, wobei die Spitze der Pipettiernadel (42) parallel zur seitlichen Aussenfläche des Bezugskörpers (45) und in einem bestimmten Abstand (d) davon geführt wird, welcher Abstand ein Mass für die zulässige Krümmung der Pipettiernadel in jeder der waagerechten Transportrichtungen (X- bzw. Y-Richtung) ist.

2. Analysengerät gemäss Anspruch 1, **dadurch ge-**

**kennzeichnet, dass** es ferner folgende Mittel enthält:

   a) eine elektrische Schaltung zur Messung der Kapazität zwischen der Pipettiernadel (42) und dem Bezugskörper (45), und

   b) Mittel zur Bestimmung der Koordinaten einer Bezugsposition der Pipettiernadel (42) in wenigstens einer der waagerechten Transportrichtungen (X- bzw. Y-Richtung), wobei diese Mittel dazu geeignet sind, die Transportvorrichtung (51-55) der Pipettiernadel (42) so zu bewegen, dass die Pipettiernadel (42) in entgegengesetzten Richtungen zu je einer Position in der Nähe jeder der beiden Aussenflächen (76, 77 bzw. 78, 79) des Bezugskörpers (45) bewegt wird, die senkrecht zur Transportrichtung angeordnet sind, wobei die Pipettiernadel (42) jeweils zu einer Aussenfläche des Bezugskörpers (45) hin bewegt wird, bis der mit der Schaltung gemessene Wert der elektrischen Kapazität zwischen der Pipettiernadel (42) und dem Bezugskörper (45) einen vorbestimmten Wert erreicht, der einem bestimmten Abstand zwischen der Pipettiernadel (42) und der Aussenfläche des Bezugskörpers (45) entspricht.

3. Analysengerät gemäss Anspruch 1, **dadurch gekennzeichnet, dass** der Bezugskörper (45) in einer waagerechten Ebene einen quadratischen Querschnitt hat.

4. Verfahren zum automatischen Transport einer Pipettiernadel (42) einer automatischen Pipettiervorrichtung eines Analysengerätes zu einer Anzahl Pipettierpositionen mittels einer Transportvorrichtung (51-55), wobei jede Pipettierposition der Position eines bestimmten Gefässes entspricht, wobei die Transportvorrichtung (51-55) dazu eingerichtet ist, die Pipettiernadel (42) in drei zueinander senkrechten Richtungen (X, Y, Z) zu bewegen, und wobei jede dieser Richtungen parallel zu einer der Koordinatenachsen des Koordinatensystems der Transportvorrichtung (51-55) ist, wobei zwei der Transportrichtungen (X-, Y-Richtung) waagrecht verlaufen und die dritte Transportrichtung (Z-Richtung) vertikal verläuft, wobei zur Prüfung der Geradlinigkeit der Pipettiernadel (42) diese relativ zu einem Bezugskörper (45) bewegt wird, der elektrisch leitend ist und mechanisch und elektrisch mit der Grundplatte (12) verbunden, ist sowie in jeder der waagrechten Transportrichtungen (X-, Y-Richtung) zwei Aussenflächen (76, 77 bzw. 78, 79) hat, die senkrecht zur Transportrichtung angeordnet sind, wobei eine Berührung des Bezugskörpers (45) mit der Pipettiernadel (42) mittels einer elektrischen Schaltung erfasst wird , wenn die Pipettiernadel eine Krümmung aufweist, welche eine solche Berührung ermöglicht,

**dadurch gekennzeichnet, dass** zur Prüfung der Geradlinigkeit der Pipettiernadel (42) die Spitze der Pipettiernadel (42) um den Bezugskörper (45) entlang eines geschlossenen Weges (81, 82, 83, 84) geführt wird der eine Fläche umfasst, in der ein Querschnitt des Bezugskörpers in einer waagrechten Ebene enthalten ist, wobei die Spitze der Pipettiernadel (42) parallel zur seitlichen Aussenfläche des Bezugskörpers (45) und in einem bestimmten Abstand (d) davon gerührt wird, welcher Abstand ein Mass für die zulässige Krümmung der Pipettiernadel in jeder der waagerechten Transportrichtungen (X- bzw. Y-Richtung) ist.

5. Verfahren gemäss Anspruch 4, **dadurch gekennzeichnet, dass** zur Messung der Koordinaten einer Bezugsposition der Pipettiernadel (42) in wenigstens einer der waagerechten Transportrichtungen (X- bzw. Y-Richtung)

die Pipettiernadel (42) durch die Transportvorrichtung (51-55) in entgegengesetzten Richtungen zu je einer Position in der Nähe jeder der beiden Aussenflächen (76, 77 bzw. 78, 79) des Bezugskörpers (45) bewegt wird, die senkrecht zur Transportrichtung angeordnet sind, wobei die Pipettiernadel (42) jeweils zu einer Aussenfläche des Bezugskörpers (45) hin bewegt wird, bis der mit einer Schaltung gemessene Wert der elektrischen Kapazität zwischen der Pipettiernadel (42) und dem Bezugskörper (45) einen vorbestimmten Wert erreicht, der einem bestimmten Abstand zwischen der Pipettiernadel (42) und der Aussenfläche des Bezugskörpers (45) entspricht.

**Claims**

1. An analytical device containing the following components:

    (a) a horizontal baseplate (12) on which primary vessels (13, 23) and secondary vessels (31) are disposed,

    (b) a pipetting needle (42) made of electrically conductive material and connected by a line (99) to a metering device (96) for transferring predetermined volumes of liquid from a primary vessel (13, 23) to a secondary vessel (31),

    (c) a conveyor (51 - 55) for controlled conveyance of the pipetting needle (42) in three directions (X, Y, Z) perpendicular to one another, two of the transport directions (X, Y) being horizontal and the third transport direction (Z) being vertical,

    (d) an electrically conductive reference member (45) mechanically and electrically connected to the baseplate (12) and having two outer surfaces (76, 77 and 78, 79) at right angles to the conveying direction in each of the horizontal conveying directions (X, Y),

    (e) a control device for controlling the metering device (96) and the conveyor (51 - 55),

    (f) an electric circuit for detecting an electric contact between the tip of the pipetting needle (42) and the reference member (45), and

    (g) a display means connected to the electric circuit and displaying a contact detected by the circuit between the pipetting needle (42) and the reference member (45), if the needle has a bend permitting such contact,

**characterised in that** it also comprises means for guiding the tip of the pipetting needle (42) around the reference member (45) along a closed path (81, 82, 83, 84) comprising a surface containing a cross-section of the reference member in a horizontal plane, the tip of the pipetting needle (42) being guided parallel to the lateral outer surface of the reference member (45) and at a defined distance (d) therefrom, the distance being a measure of the permitted bend of the pipetting needle in each of the horizontal conveying directions (X, Y).

2. An analytical device according to claim 1, **characterised in that** it also contains the following means:

    a) an electric circuit for measuring the capacitance between the pipetting needle (42) and the reference member (45) and

    b) means for determining the co-ordinates of a reference position of the pipetting needle (42) in at least one of the horizontal conveying directions (X, Y), the means being adapted to move the conveyor (51 - 55) of the pipetting needle (42) so that the pipetting needle (42) is moved in opposite directions to a respective position in the neighbourhood of each of the two outer surfaces (76, 77 and 78, 79) of the reference member (45) at right angles to the conveying direction, the pipetting needle (42) being in each case moved towards an outer surface of the reference member (45) until the electric capacitance measured by the circuit between the pipetting needle (42) and the reference member (45) reaches a predetermined value corresponding to a defined distance between the pipetting needle (42) and the outer surface of the reference member (45).

3. An analytical device according to claim 1, **characterised in that** the reference member (45) has a square cross-section in a horizontal plane.

4. A method of automatically conveying a pipetting needle (42) in an automatic pipetting device in an analytical device to a number of pipetting positions via a conveyor (51 - 55), wherein each pipetting position corresponds to the position of a given vessel, wherein the conveyor (51 - 55) is designed to move the pipetting needle (42) in three directions (X, Y, Z) perpendicular to one another, and wherein each said direction is parallel to one axis of the co-ordinate system of the conveyor (51 - 55), wherein two of the conveying directions (X, Y) are horizontal and the third conveying direction (Z) is vertical, wherein in order to check the straightness of the pipetting needle (42), the needle is moved relative to a reference member (45) which is electrically conductive and mechanically and electrically connected to the baseplate (12) and in each horizontal conveying direction (X, Y) has two outer surfaces (76, 77 and 78, 79) at right angles to the conveying direction, wherein contact between the reference member (45) and the pipetting needle (42) is detected by an electric circuit when the pipetting needle has a bend permitting such contact, **characterised in that** in order to check the straightness of the pipetting needle (42), the tip of the pipetting needle (42) is guided around the reference member (45) along a closed path (81, 82, 83, 84) comprising a surface containing a cross-section of the reference member in a horizontal plane, the tip of the pipetting needle (42) being guided parallel to the outer side surface of the reference member (45) and at a given distance (d) therefrom, the distance being a measure of the permissible curvature of the pipetting needle in each of the horizontal conveying directions (X, Y).

5. A method according to claim 4, **characterised in that** in order to measure the co-ordinates of a reference position of the pipetting needle (42) in at least one of the horizontal conveying directions (X, Y), the pipetting needle (42) is moved by the conveyor (51 - 55) in opposite directions to a respective position near each of the two outer surfaces (76, 77 and 78, 79) of the reference member (45) at right angles to the conveying direction, wherein the pipetting needle (42) is each time moved towards an outer surface of the reference member (45) until the electric capacitance measured by a circuit between the pipetting needle (42) and the reference member (45) reaches a predetermined value corresponding to a given distance between the pipetting needle (42) and the outer surface of the reference member (45).

**Revendications**

1. Appareil d'analyse, qui contient les composants suivants :

   a) une plaque de base horizontale (12), sur laquelle sont disposés des récipients primaires (13 ou 23) et des récipients secondaires (31),

   b) une aiguille de transfert à la pipette (42) reliée par une canalisation (99) à un dispositif de dosage (96) et réalisée en un matériau électriquement conducteur, pour la transmission respectivement d'un volume de liquide prédéterminé depuis le récipient primaire (13 ou 23) jusqu'à un récipient secondaire (31),

   c) un dispositif de transport (51-55) pour réaliser le transport commandé de l'aiguille de transfert à la pipette (42) dans trois directions perpendiculaires entre elles (directions X, Y, Z), deux des directions de transport (directions X, Y) étant horizontales et la troisième direction de transport (direction Z) étant verticale,

   d) un corps de référence électriquement conducteur (45), qui est relié mécaniquement et électriquement à la plaque de base (12) et possède, dans chacune des directions horizontales de transport (direction X ou Y), deux surfaces extérieures (76, 77 ou 78, 79), qui sont disposées perpendiculairement à la direction de transport,

   e) un dispositif de commande pour commander le dispositif de dosage (96) et le dispositif de transport (51-55),

   f) un circuit électrique pour détecter un contact électrique entre la pointe de l'aiguille de transfert à la pipette (42) et le corps de référence (45), et

   g) un dispositif d'affichage, qui est relié au circuit électrique et qui indique un contact détecté avec ce circuit, entre l'aiguille de transfert à la pipette (42) et le corps de référence (45), lorsque l'aiguille possède une courbure qui permet un tel contact,

   **caractérisé en ce qu'**il contient en outre des moyens pour guider la pointe de l'aiguille (42) de transfert à la pipette autour du corps de référence, le long d'un trajet fermé (81, 82, 83, 84), qui comprend une surface, dans laquelle est contenue une section transversale du corps de référence dans un plan horizontal, la pointe de l'aiguille (42) de transfert à la pipette étant guidée parallèlement à la surface extérieure latérale du corps de référence (45) et à une distance déterminée (d) de cette surface, laquelle distance est une mesure de la courbure admissible de l'aiguille de transfert à la pipette dans chacune des directions de transport horizontales (direction X ou direction Y).

2. Appareil d'analyse selon la revendication 1, **caractérisé en ce qu'**il contient en outre les moyens suivants :

> a) un circuit électrique pour mesurer la capacité entre l'aiguille de transfert à la pipette (42) et le corps de référence (45), et

> b) des moyens pour déterminer les coordonnées d'une position de référence de l'aiguille de transfert à la pipette (42) dans au moins l'une des directions de transport horizontales (directions X ou Y), ces moyens convenant pour déplacer le dispositif de transport (51-55) de l'aiguille de transfert à la pipette (42) de manière que l'aiguille de transfert à la pipette (42) soit déplacée dans des directions opposées jusqu'à une position située à proximité de chacune des deux surfaces extérieures (76, 77 ou 78, 79) du corps de référence (45), qui sont disposées perpendiculairement à la direction de transport, auquel cas l'aiguille de transfert à la pipette est déplacée respectivement par rapport en direction d'une surface extérieure du corps de référence (45) jusqu'à ce que la valeur, mesurée avec le circuit, de la capacité électrique entre l'aiguille de transfert à la pipette (42) et le corps de référence (45) ait atteint une valeur prédéterminée, qui correspond à une distance déterminée entre l'aiguille de transfert à la pipette (42) et la surface extérieure du corps de référence (45).

3. Appareil d'analyse selon la revendication 1, **caractérisé en ce que** le corps de référence (45) possède, dans un plan horizontal, une séquence transversale carrée.

4. Procédé de transport automatique d'une aiguille de transfert à la pipette (42) d'un dispositif automatique de transfert à la pipette d'un appareil d'analyse pour un certain nombre de positions de transfert à la pipette à l'aide d'un dispositif de transport (51-55), selon lequel chaque position de transfert à la pipette correspond à la position d'un récipient déterminé, le dispositif de transport (51-55) étant agencé de manière à déplacer l'aiguille de transfert à la pipette (42) dans trois directions perpendiculaires entre elles (X, Y, Z), et selon lequel chacune de ces directions est parallèle à l'un des axes de coordonnées du système de coordonnées du dispositif de transport (51-55), deux des directions de transport (directions X, Y) étant horizontale et la troisième direction de transport (direction Z) étant verticale, et selon lequel pour contrôler la rectitude de l'aiguille de transfert à la pipette (42), cette dernière est déplacée par rapport à un corps de référence (45) qui est électriquement conducteur et est relié mécaniquement ou électriquement à la plaque de base (12), et possède dans chacune des directions de transport horizontales (directions X, Y) deux surfaces extérieures (76, 77 ou 78, 79) qui sont perpendiculaires à la direction de transport, et selon lequel un contact du corps de référence (45) avec l'aiguille de transfert à pipette (42) est déterminé au moyen d'un circuit électrique lorsque l'aiguille de transfert à la pipette possède une courbure qui permet un tel contact, **caractérisé en ce que** pour le contrôle de la rectitude de l'aiguille de transfert à la pipette (42), la pointe de l'aiguille de transfert à la pipette (42) est guidée autour du corps de référence (45) le long d'un trajet fermé (81, 82, 83, 84), qui possède une surface qui contient une section transversale du corps de référence dans un plan horizontal, la pointe de l'aiguille de transfert à la pipette (42) étant guidée parallèlement à la surface extérieure latérale du corps de référence (45) et à une distance déterminée (d) de ce dernier, laquelle distance est une mesure de la courbure admissible de l'aiguille de transfert à la pipette dans chacune des directions de transport horizontales (direction X ou Y).

5. Procédé selon la revendication 4, **caractérisé en ce que** pour la mesure de la coordonnée d'une position de référence de l'aiguille de transfert à la pipette (42) dans au moins l'une des directions de transport horizontales (directions X ou Y), l'aiguille de transfert à la pipette (42) est déplacée dans des directions opposées par le dispositif de transport (51-55) en direction d'une position à proximité de chacune des deux surfaces extérieures (76, 77 ou 78, 79) du corps de référence (45), qui sont disposées perpendiculairement à la direction de transport, l'aiguille de transfert à la pipette (49) étant déplacée respectivement en direction d'une surface extérieure du corps de référence (45) jusqu'à ce que la valeur de la capacité électrique, mesurée par un circuit, entre l'aiguille de transfert à la pipette (42) et le corps de référence (45) atteigne à une valeur prédéterminée, qui correspond à une distance déterminée entre l'aiguille de transfert à la pipette (42) et la surface extérieure du corps de référence (45).

**Fig. 1**

Fig. 2

EP 0 681 160 B1

# Fig. 3

Fig. 4

Fig. 5

31

31

**Fig. 6**

*Fig. 7*

*Fig. 8*

Z

42

42

46

77

76

45

78

Fig. 9

EP 0 681 160 B1

**Fig. 10**

Fig. 11

EP 0 681 160 B1

**Fig. 12**

*Fig. 13*